# EUROPÄISCHE PATENTSCHRIFT

(11) **EP 0 450 128 B1**
(45) Veröffentlichungstag und Bekanntmachung des Hinweises auf die Patenterteilung: **26.07.1995**
(21) Anmeldenummer: 90106611.8
(22) Anmeldetag: 06.04.1990
(51) Int. Cl.: H04B 1/10

(54) **Verfahren zur aktiven Störungsunterdrückung bei Stereo-Multiplex-Signalen**
Method for active noise suppression in stereo multiplex signals
Procédé pour la réduction active de perturbations de signaux stéréophoniques multiplexés

(43) Veröffentlichungstag der Anmeldung: 09.10.1991
(73) Patentinhaber: Deutsche ITT Industries GmbH, 79108 Freiburg (DE)
(72) Erfinder: Winterer, Martin, Dipl.-Phys., D-7803 Gundelfingen (DE); Bächer, Dieter, Dipl.-Ing., D-7800 Freiburg (DE)

(56) Entgegenhaltungen:
- EP-A- 0 047 386
- DE-A- 3 131 852
- PATENT ABSTRACTS OF JAPAN, Band 4, Nr. 148 (E-30)[630], 18. Oktober 1980;& JP-A-55 100 752 (MATSUSHITA) 31-07-1980
- IDEM

## Beschreibung

Die Erfindung betrifft ein Verfahren zur aktiven Störungsunterdrückung (= ASU) bei Stereo-Multiplex-Signalen, insbesondere in einem Auto-Rundfunkempfänger, der durch Zündsignale gestört ist. Diese ergeben nach der Zwischenfrequenzumsetzung Pulsstörungen, die als steilflankige Nadeln das Stereo-Multiplex-Signal überlagern und meist als gegenphasige Nadelimpulse ausgebildet sind. Die Beseitigung dieser Störungen durch übliche Tiefpaß-Filter ist unbefriedigend, weil diese eine Verbreiterung der Impulse bewirken, die dann nach der Stereo-Dekodierung im Hörbereich liegen.

Aus "Funkschau", Nr.25, 1984, Seiten 57 und 58 ist beispielsweise eine aktive Störaustastung bekannt, die der Störungsunterdrückung bei Auto-Rundfunkempfängern dient. Sie enthält eine Schaltung, die derartige Kraftfahrzeug-Störimpulse erkennt. Mittels eines elektronischen Umschalters im Signalweg, der den Signalweg während des Störimpulses unterbricht, wird das gestörte Signal durch ein gespeichertes Signal, beispielsweise aus einer Abtasthalteschaltung, ersetzt. Damit die Austastung vor dem gestörten Signalabschnitt erfolgt, wird das Stereo-Multiplex-Signal gegenüber dem Fehlererkennungssignal um 3x10⁻⁶ Sekunden vorverzögert.

Aus der Offenlegungsschrift DE-A 30 28 334 (= US 45 01 014) ist eine aktive Störungsunterdrückungsschaltung für kurzzeitig gestörte Audiosignale bekannt, bei der der gestörte Signalbereich durch eine geeignete Übergangsfunktion ersetzt wird. Diese wird durch Interpolation an das ungestörte Signal störungsfrei angepaßt. Die Schaltung verarbeitet hierbei digitalisierte Abtastwerte.

Aus EP-B 185 692 ist ebenfalls ein Verfahren zur Beseitigung von Störungen in einem digitalisierten Audiosignal bekannt. Bei periodischen oder unperiodischen Signalen werden hierbei die gestörten kurzzeitigen Signalabschnitte entweder durch eine Signalzusammenziehung - bei der ein kürzerer Signalabschnitt gleichsam aus dem Signalverlauf herausgeschnitten wird - oder durch eine gleichlange Signaleinfügung eines unmittelbar benachbarten Signalabschnitts ersetzt, wobei die Anschlußstellen jeweils Nulldurchgänge des ungestörten Signals sind. Die Speicherung oder Verzögerung der Signalfolge erfolgt mit Hilfe eines Signalspeichers anhand der digitalisierten Abtastwertfolge. Die Signaleinfügung entspricht somit einer kurzzeitigen Signalwiederholung.

Aus Patent Abstracts of Japan, Band 4, Nr. 148 (E-30) (Seite 630), 18. Oktober 1980 (JP-A 55/100752) ist eine Störunterdrückungsschaltung für Stereo-FM-Signale bekannt, bei der aus ungestörten Signalbereichen vor und hinter dem gestörten Signalabschnitt durch Mittelwertbildung ein Einfügungssignal gebildet wird, das mindestens den gestörten Signalabschnitt überdeckt. Das Signal durchläuft dabei zwei Grundverzögerungsstufen mit festen Verzögerungszeiten. Mittels elektronischer Schalter werden im Störunterdrückungsbetrieb die erforderlichen Signale an den einzelnen Grundverzögerungsstufen abgegriffen und zur Mittelwertbildung einem Addierer zugeführt, vgl. den Oberbegriff des Anspruchs 1.

Aus EP-A 0 047 386 ist ein Verfahren und eine -zugehörige Schaltungsanordnung zur Beseitigung von akustischen Störsignalen bekannt, die insbesondere in Verbindung mit der Weiterverarbeitung von auf Tonbändern gespeicherten Signalen auftreten. Dabei wird zur Anpassung an unterschiedliche Pegelsprünge, die auch bei eingefügten Signalen zur Störunterdrückung auftreten können, eine gespeicherte Übergangsfunktion verwendet, z.B. eine Halbsinusfunktion, damit die Übergänge nicht abrupt auftreten und damit stören, sondern "weich" verlaufen. Das Verfahren verwendet dabei diskrete Abtastfolgen für die aufzubereitenden Audiosignale.

Aufgabe der in den Ansprüchen gekennzeichneten Erfindung ist es, ein verbessertes Verfahren zur Störungsunterdrückung bei kurzzeitig gestörten Stereo-Multiplex-Signalen anzugeben, das deren Dekodierung, insbesondere bei Störungen durch Kraftfahrzeug-Zündimpulse, ermöglicht.

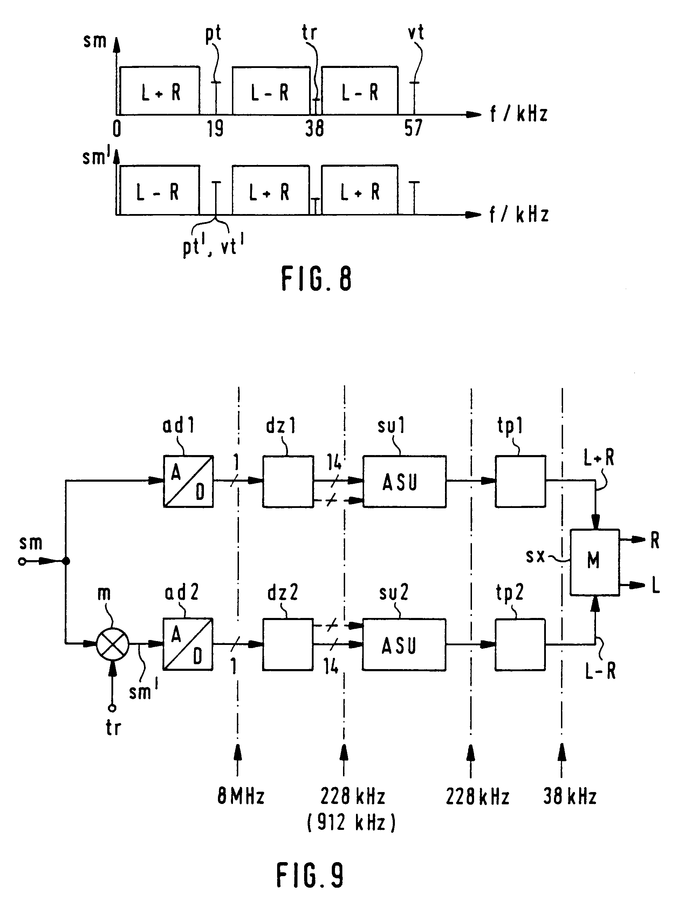

Die oben genannten Störungsunterdrückungsverfahren beziehen sich auf hochfrequent übertragene Audiosignale, die auch frequenzmodulierte Signale des UKW-Bereichs einschließen können. Die speziellen Probleme bei der Stereo-Decodierung infolge der Störimpulsverbreiterung werden jedoch nicht angesprochen. Die Dauer des gestörten Signalabschnittes von ca. 5x10⁻⁶ Sekunden liegt im Größenordnungsbereich der Periodendauer des Stereo-Hilfsträgers von ca. 26x10⁻⁶ Sekunden. Dies bezieht sich auf ein Stereo-Multiplex-Signal nach dem allgemein üblichen FCC (= Federal Communication)- oder EBU-(= European Broadcasting Union)- Stereo-Standard, der auch als "Pilotton-Verfahren" bezeichnet wird. Das zugehörige Frequenzschema ist im oberen Teil der Fig.8 dargestellt. Störungen im Bereich des Hilfsträgers wirken sich daher sehr nachteilig auf die Dekodierung aus.

Die Erfindung wird nun anhand der Figuren der Zeichnung näher erläutert:
Fig.1 zeigt ein gestörtes Stereo-Multiplex-Signal,
Fig.2 zeigt ein weiteres gestörtes Stereo-Multiplex-Signal,
Fig.3 zeigt das verallgemeinernde Blockschaltbild einer aktiven Störungsunterdrückungsschaltung (= ASU),
Fig.4 zeigt ein einfaches Ausführungsbeispiel der Signaleinfügungsschaltung nach der Erfindung,
Fig.5 zeigt ein bevorzugtes Ausführungsbeispiel der Signaleinfügungsschaltung nach der Erfindung,
Fig.6 zeigt ein weiteres Ausführungsbeispiel einer Signaleinfügungsschaltung,
Fig.7 zeigt eine Weiterbildung der Signaleinfügungsschaltung nach Fig.5 mit Hilfsinterpolator,
Fig.8 zeigt das Frequenzschema des Stereo-Multiplex-Signals in Basisbandlage und in inverser Basisbandlage und
Fig.9 zeigt schließlich das Blockschaltbild einer digitalen Stereo-Multiplex-Signalverarbeitungsschaltung mit jeweils einer ASU in den beiden Signalpfaden.

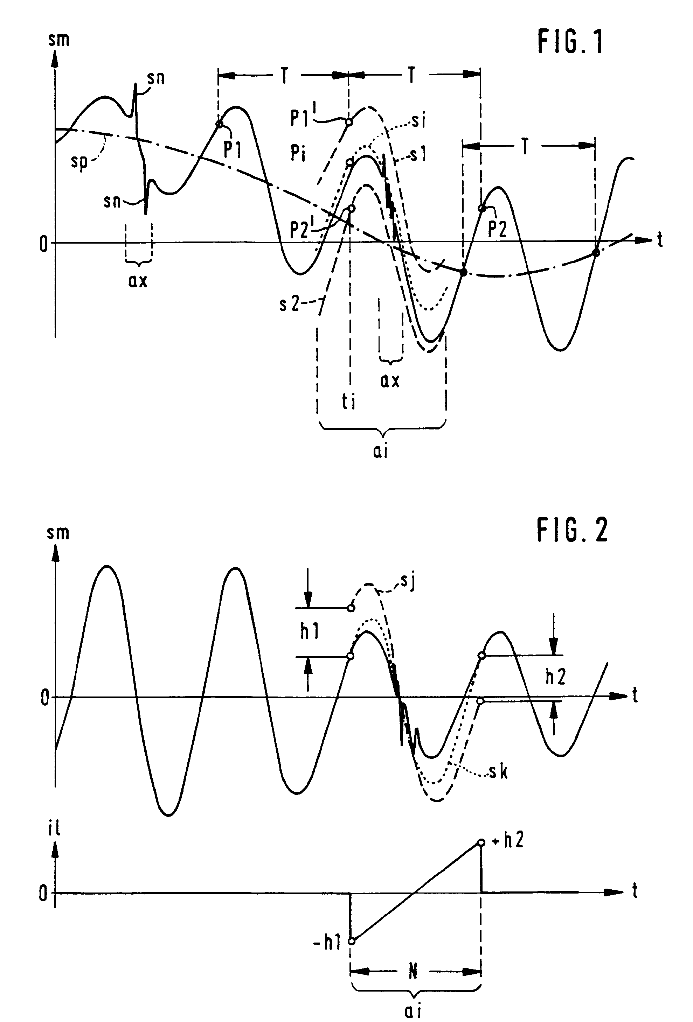

In Fig.1 ist der typische Verlauf eines Stereo-Multiplex-Signals sm über einige Perioden T des Stereo-Hilfsträgers dargestellt. Die Zündstörungen bewirken in dem gestörten Signalabschnitt ax die gegenphasigen Nadelimpulse sm, die etwa einen zeitlichen Abstand von 5x10⁻⁶ sec. aufweisen. Der Signalmittelwert sp des Stereo-Multiplex-Signals sm ist als strichpunktierte Linie dargestellt. Die beiden Umhüllenden des Stereo-Multiplex-Signals sm stellen die beiden codierten Stereokanäle dar.

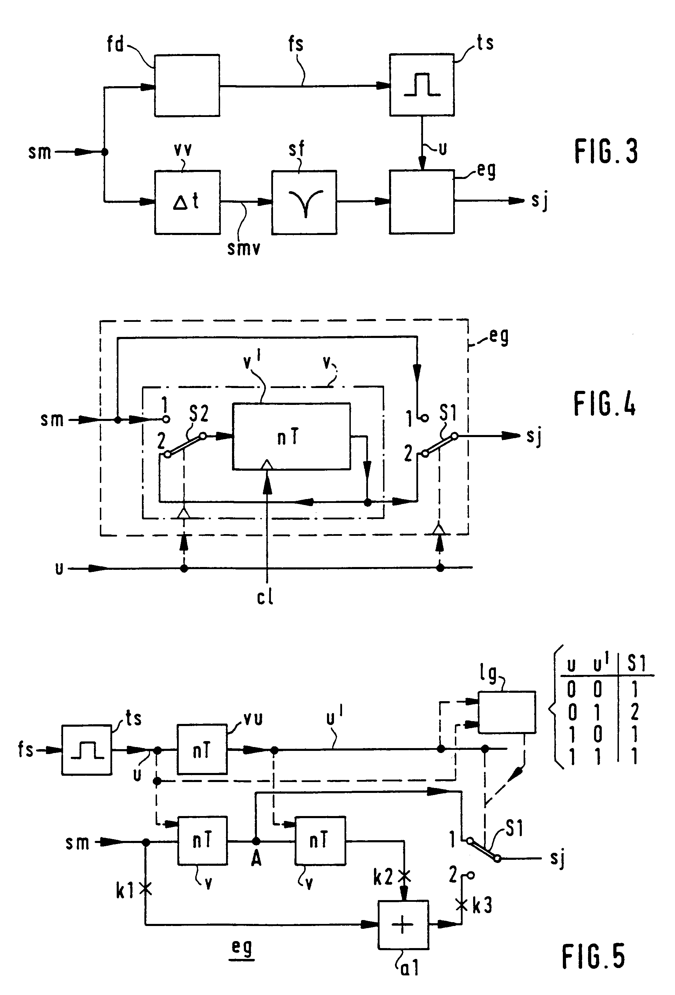

Im Einfügungsintervall ai findet sich ein weiterer gestörter Signalabschnitt ax, dessen Störsignalverlauf weniger deutlich die ausgeprägten Nadelimpulse zeigt. Wenn die Fehlererkennungsschaltung fd nach Fig.3 die Störungen als solche erkennt, dann ist die Signaleinfügung nach der Erfindung gewährleistet. Zur sicheren Störungsunterdrückung muß das Einfügungssignal si bzw. s1 bzw. s2 jedoch den gestörten Signalabschnitt ax beidseitig sicher überlappen. Im dargestellten Stereo-Multiplex-Signal sm von Fig.1 hat der Stereo-Hilfsträger tr einen hohen Signalanteil, so daß dessen Periodizität deutlich mit der Periodendauer T im Signalverlauf zu erkennen ist. Diese Periodizität wird für das Einfügungssignal si bzw. s1 bzw. s2 ausgenutzt, indem der zu ersetzende Signalwert zum Einfügungszeitpunkt ti durch einen Signalwert ersetzt wird, der eine Hilfsträger-Periodendauer T früher oder später liegt oder aus diesen Werten gebildet wird. In Fig.1 ist dies der erste bzw. zweite Abtastwert P1, P2 der den ersten bzw. zweiten Einfügungswert P1′, P2′. bildet. Im Einfügungsintervall ai entspricht somit der gestrichelt dargestellte Verlauf des ersten Einfügungssignals s1 dem zeitlich früheren Stereo-Multiplex-Signal sm und der ebenfalls gestrichelte Verlauf des zweiten Einfügungssignals s2 dem späteren Stereo-Multiplex-Signal sm. Zur Verdeutlichung wurde in Fig.1 das Einfügungsintervall ai in einen Signalbereich gelegt, bei dem sich sowohl der Signalmittelwert sp als auch die Amplitude des Stereo-Hilfsträgers tr stark ändern. Das erste bzw. das zweite Einfügungssignal s1, s2 weichen in diesem extremen Fall erheblich vom ungestörten Stereo-Multiplex-Signal sm ab. Eine lineare Überlagerung dieser beiden Einfügungssignale s1, s2 führt jedoch zu einem punktiert dargestellten Einfügungssignal si, das sich ausgezeichnet an den ungestörten Kurvenverlauf anschmiegt. Diese einfache lineare Überlagerung der beiden Kurvenabschnitte s1, s2 erfolgt beispielsweise in vorteilhafter Weise in der einfachen Schaltungsanordnung nach Fig.5.

Bei dieser Art der Einfügung muß nur sichergestellt sein, daß das Einfügungsintervall ai den gestörten Signalabschnitt ax beidseitig überlappt. Die zeitliche Dauer des Einfügungsintervalls ist dabei frei. Gleichfalls braucht das Einfügungsintervall ai nicht beim Durchgang des Stereo-Multiplex-Signals sm durch seinen Signalmittelwert sp beginnen. Dies ermöglicht eine äußerst einfache schaltungstechnische Realisierung des Einfügungsverfahrens, indem das Stereo-Multiplex-Signal sm über Grundverzögerungsstufen v mit fester Verzögerungszeit T oder einem hierzu ganzzahligen Vielfachen nT, dem Grundintervall, geführt wird, wobei n= 1, 2, 3, ... ist. Aus den Abgriffen an diesen einzelnen Grundverzögerungsstufen v wird dann das Einfügungssignal s1, s2, si gebildet. Besonders einfach ist es, wenn das Stereo-Multiplex-Signal als abgetastetes Signal in digitaler Form vorliegt, weil sich dann die Grundverzögerungsstufen auf einfache Weise durch digitale Datenspeicher realisieren lassen.

Solange eine Störung des Stereo-Multiplex-Signals sm erkannt wird, solange wird auf das ständig präsente Einfügungssignal s1 bzw. s2 bzw. si umgeschaltet. Die Überlappung wird dabei durch eine geringfügige Vorverzögerung des Stereo-Multiplex-Signals und eine geringfügigen Verlängerung des Fehlererkennungssignals fs oder Umschaltsignals u sichergestellt, vgl. Fig.3.

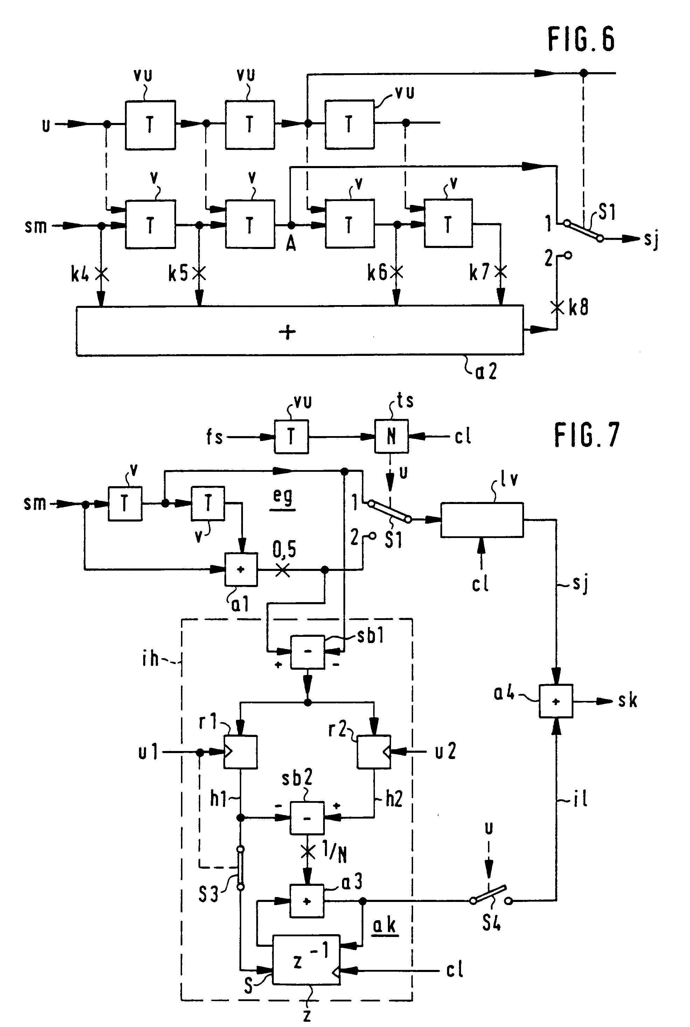

Fig.2 zeigt den schematischen Zeitverlauf eines weiteren gestörten Stereo-Multiplex-Signal sm mit gestrichelt dargestelltem Einfügungssignal sj. Am Anfang bzw. Ende des Einfügungsintervalls ai weist das Einfügungssignal sj eine erste bzw. zweite Sprunghöhe h1, h2 gegenüber dem ursprünglichen Stereo-Multiplex-Signal sm auf. Die Beseitigung der ersten und zweiten Sprunghöhe h1, h2 kann durch eine einfache lineare Interpolation erfolgen, indem dem Einfügungssignal sj der im unteren Teil der Fig.2 dargestellte Interpolationswert il hinzugefügt wird. Dieser wird aus der linearen zeitlichen Interpolation der ersten und zweiten Sprunghöhe h1, h2, beispielsweise mittels einer Schaltungsanordnung nach Fig.7, gebildet. Durch diese lineare Interpolation fügt sich das interpolierte Einfügungssignal sk am Anfang und Ende des Einfügungsintervalls hi ohne Sprung in das Stereo-Muliplex-Signal sm ein.

Fig.3 zeigt schematisch das Blockschaltbild einer Schaltungsanordnung zur aktiven Störungsunterdrückung (= ASU), dessen grundlegendes Prinzip beispielsweise aus der bereits genannten "Funkschau", Nr.25, 1984, Seite 57 und 58 bekannt ist. Das Stereo-Multiplex-Signal sm wird mittels einer Fehlererkennungsschaltung fd auf Störsignale untersucht. Das dabei anfallende Fehlererkennungssignal fs löst in einer Zeitgeberschaltung ts ein Umschaltsignal u von bestimmter Dauer aus. Parallel zur Fehlererkennungsschaltung fd wird das Stereo-Multiplex-Signal sm dem Eingang einer Vorverzögerungsstufe vv zugeführt. An diese ist ein Sperrfilter sf angeschlossen, das beispielsweise den Pilotton pt mit 19 kHz aus dem Stereo-Signalgemisch entfernt. Dieser mit hoher Amplitude vorhandene Pilotton beeinträchtigt die aktive Störungsunterdrückung und wird daher möglichst herausgefiltert. Die Vorverzögerungsstufe vv verzögert das Stereo-Multiplex-Signal damit es nicht früher als das Umschaltsignal u an der Einfügungsschaltung eg ankommt. In der vorbekannten Schaltungsanordnung enthält die Einfügungsschaltung eg eine analoge Abtast-Halteschaltung mit Speicherkondensator, die durch das Umschaltsignal u aktiviert wird und als Einfügungssignal sj während der vorgegebenen Umschaltdauer den analog gespeicherten Signalwert zur Verfügung stellt.

In Fig.4 ist ein einfaches Ausführungsbeispiel einer erfindungemäßen Einfügungsschaltung eg dargestellt. Sie enthält eine Grundverzögerungsstufe v für Daten, deren Verzögerungszeit ein einfaches ganzzahliges Vielfaches n der Periodendauer T eines im Stereo-Multiplex-Signal sm enthaltenen Trägers pt, tr, vt ist, wobei n= 1, 2, 3, ... ist. Als Träger können auftreten: der Pilotton pt, der Stereo-Hilfsträger tr, und der Verkehrsträger vt mit beispielsweise 19 kHz bzw. 38 kHz bzw. 57 kHz, vgl. Fig.8.

Die Grundverzögerungsstufe v enthält neben ihrer eigentlichen Speichereinrichtung v′ mindestens einen ersten elektronischen Umschalter S1, dessen erstem Eingang 1 das unverzögerte Stereo-Multiplex-Signal sm und dessen zweitem Eingang 2, das in der Speichereinrichtung v′ verzögerte Signal zugeführt ist. Der Ausgang des ersten elektronischen Umschalters S1 liefert das Einfügungssignal sj; die Steuerung erfolgt durch das Umschaltsignal u.

Der Speichereinrichtung v′, die beispielsweise als Schieberegister oder als Schreib-Lesespeicher (= RAM) ausgeführt ist, ist der Systemtakt cl zugeführt, der auch synchron zum Datentakt ist.

Die Grundverzögerungsstufe v kann durch einen zweiten elektronischen Umschalter S2 im Eingang der Speichereinrichtung v′ zusätzlich verbessert werden. Am Ausgang dieses elektronischen Umschalters liegt dann der Eingang der Speichereinrichtung v′, am ersten Schaltereingang 1 das unverzögerte Stereo-Multiplex-Signal sm und am zweiten Schaltereingang 2 das Ausgangssignal der Speichereinrichtung v′. Die Steuerung dieses Schalters S2 erfolgt ebenfalls durch das Umschaltsignal u, wobei die jeweiligen Schalterpositionen 1, 2 des ersten und zweiten elektronischen Umschalters S1, S2 einander entsprechen.

Durch den zweiten elektronischen Umschalter S2 wird erreicht, daß nie ein gestörtes Stereo-Multiplex-Signal sm in die Speichereinrichtung v′ gelangt. Statt des gestörten Abtastwertes wird dieser durch einen um das Grundintervall nT früheren Abtastwert ersetzt. Diese Verbesserung ist dann interessant, wenn die Einfügungsschaltung eg mindestens zwei hintereinander geschaltete Grundverzögerungsstufen v enthält.

In Fig.5 ist ein besonders vorteilhaftes Ausführungsbeispiel der Signaleinfügungsschaltung eg dargestellt, bei der das Einfügungssignal sj aus den linear überlagerten Signalabschnitten vor und nach dem gestörten Signalabschnitt ax gebildet wird, vgl. das punktiert dargestellte Einfügungssignal si in Fig.1.

Zwei in Reihe geschaltete Grundverzögerungsstufen v verzögern das Stereo-Multiplex-Signal sm. Das mittels der beiden Grundverzögerungsstufen v verzögerte Signal ist dem einen Eingang und das unverzögerte Signal dem anderen Eingang eines Addierers, dem ersten Addierer a1, zur linearen Kombination zugeführt. Der Ausgang des ersten Addierers a1 speist den zweiten Eingang des wie in Fig.4 vorhandenen ersten elektronischen Umschalters S1, an dessen Ausgang das Einfügungssignal sj abgreifbar ist. Der Verbindungsknoten zwischen den beiden in Reihe geschalteten Grundverzögerungsstufen v, der Normalabgriff A, ist auf den ersten Schaltereingang 1 geführt. In der Schalterposition 1 wird das ungestörte Stereo-Multiplex-Signal sm auf den Ausgang der Einfügungsschaltung eg geschaltet, wobei es um das Grundintervall nT verzögert ist.

Die Bildung des Einfügungssignals für den zweiten Schaltereingang 2 erfolgt durch additive Überlagerung des unverzögerten und des um zwei Grundintervalle 2nT verzögerten Stereo-Multiplex-Signals sm. Als Summiereinrichtung dient in Fig.5 der erste Addierer a1. Die Umschaltung des ersten elektronischen Umschalters S1 erfolgt durch das Umschaltsignal u′, das den ersten elektronischen Umschalter S1 von der ersten (1) in die zweite Schalterposition 2 steuert, wenn das am ersten Schaltereingang 1 abgegriffene Stereo-Multiplex-Signal sm gestört ist. Die zeitliche Übereinstimmung des Umschaltsignals u′ mit dem um ein Grundintervall nT verzögerten Stereo-Multiplex-Signal wird durch eine Umschalt-Verzögerungsstufe vu mit der Grundverzögerungszeit (= Grundintervall) nT hergestellt, über die das Umschaltsignal u geführt ist.

Das Umschaltsignal u ist entweder direkt oder über eine Zeitgeberschaltung ts mit dem Fehlersignal fs gekoppelt. Die Zeitgeberschaltung ts bewirkt, daß bei einem gestörten Signalabschnitt ax das Einfügungsintervall ai eine feste vorgegebene Länge aufweist, beispielsweise auch die Periodendauer T oder nT. Die Zeitgeberschaltung ts erweist sich aber auch dann von Vorteil, wenn das Einfügungsintervall ai den gestörten Signalabschnitt ax nur wenig überlappen soll. Unter Umständen erkennt nämlich die Fehlererkennungsschaltung fd lediglich die Extremwerte des Störsignals sn, so daß der gestörte Signalbereich länger als die Dauer des Fehlererkennungssignals fs ist - das muß dann kompensiert werden.

Die Fehlererkennungsschaltung fd enthält in der Regel einen Hochpaß, dessen untere Frequenzgrenze ca. bei 100 kHz also deutlich oberhalb des Nutzsignalbereiches liegt. Die störenden Zündimpulse fallen jedoch in diesen hohen Frequenzbereich und können dort mittels Schwellwertdetektoren herausgefiltert werden.

Wie in Fig.4 können die Grundverzögerungsstufen v von Fig.5 jeweils auch mit einem zweiten elektronischen Umschalter S2 ausgestattet sein, um zu verhindern, daß gestörte Signalanteile in die jeweiligen Speichereinrichtungen v′ gelangen. Der erste Schalteingang 1 des zweiten elektronischen Umschalters S2 ist mit dem Eingangssignal der jeweiligen Grundverzögerungsstufe v und der zweite Schalteingang 2 ist mit dem Ausgangssignal der jeweiligen Speichereinrichtung v′ gespeist.

Damit das am Ausgang des ersten Addierers a1 gebildete Einfügungssignal sj die gleiche Amplitude wie das ungestörte Stereo-Multiplex-Signal sm aufweist, sind entweder die beiden Eingangssignale des ersten Addierers a1 mittels eines ersten bzw. zweiten Gewichtungsfaktors k1, k2 zu gewichten und/oder der Ausgang des ersten Addierers a1 wird mittels eines dritten Gewichtungsfaktors k3 gewichtet. Wenn k1=k2=1 ist, dann ist k3=0,5 und wenn k1=k2=0,5 ist, dann ist k3=1. Ein Sonderfall ergibt sich, wenn entweder k1=0 oder k2=0 ist, dann wird das Einfügungssignal sj wie in Fig.4 lediglich aus dem Signalabschnitt vor bzw. nach dem gestörten Signalabschnitt ax gebildet.

Fig.6 zeigt eine Ergänzung des in Fig.5 dargestellten Ausführungsbeispieles. Anstatt der beiden in Reihe geschalteten Grundverzögerungsstufen v von Fig.5 sind in Fig.6 vier Grundverzögerungsstufen v für das Stereo-Multiplex-Signal sm in Reihe geschaltet. Bis auf den mittleren Signalabgriff, dem Normalabgriff A, sind alle Ein- und Ausgänge dieser Grundverzögerungsstufen v oder deren Verbindungsknoten auf die Eingänge eines zweiten Addierers a2 zur Summierung geschaltet. Der Ausgang dieses Addierers, der mittels eines achten Gewichtungsfaktors k8 gewichtet ist, ist mit dem zweiten Schaltereingang 2 des ersten elektronischen Umschalters S1 gekoppelt. Die Signalabgriffe des Stereo-Multiplex-Signals sm an der Grundverzögerungsstufen-Kette sind in Signalflußrichtung mittels eines vierten bzw. eines fünften bzw. sechsten bzw. siebten Gewichtungsfaktors k4, k5, k6, k7 modifiziert. Der Signalabgriff am mittleren Verbindungsknoten, also der Normalabgriff A, ist ohne Gewichtungsfaktor auf den ersten Schaltereingang 1 des ersten elektronischen Umschalters S1 geführt.

Der Synchronismus des Umschaltsignals u mit dem verzögerten Stereo-Multiplex-Signal sm wird durch eine Reihenschaltung von drei Umschalt-Verzögerungsstufen vu hergestellt. Wenn die Grundverzögerungsstufen v die Erweiterung mit dem zweiten elektronischen Umschalter S2 enthalten, dann ist dessen Steuereingang jeweils mit einem Abgriff der drei in Reihe geschalteten Umschalt-Verzögerungsstufen vu gekoppelt. Hierbei sind die Verzögerungszeiten T oder nT der Umschalt-Verzögerungsstufen und der Grundverzögerungsstufen v einander gleich.

Die größere Anzahl von Abgriffen zur Bildung des Einfügungssignals sj bewirkt, daß dessen Mittelung bezüglich des Stereo-Multiplex-Signals sm in einem größeren Zeitabschnitt verbessert wird. Je weiter dabei die abgegriffene Abtastwerte vom gestörten Signalabschnitt entfernt sind, desto geringer sollte jedoch ihre Gewichtung sein. Der fünfte und sechste Gewichtungsfaktor k5, k6 sind einander gleich und entsprechen etwa dem ersten bzw. dem zweiten Gewichtungsfaktor k1, k2 von Fig.5. Der vierte und siebte Gewichtungsfaktor k4, k7 sind ebenfalls einander gleich. Mittels des achten Gewichtungsfaktors k8 wird das Ausgangssignal des zweiten Addierers a2 auf den gleichen Amplitudenwert wie das unmodifizierte Stereo-Multiplex-Signal sm am ersten elektronischen Umschalter S1 gebracht.

Bei der Serienschaltung von Grundverzögerungsstufen v nach den Fig.5, 6 oder 7 ist es ausreichend, wenn nur die erste Grundverzögerungsstufe v mit dem zweiten elektronischen Umschalter S2 ausgestattet ist. Die Signalspeicher in der Verzögerungskette enthalten auch bei dieser Vereinfachung keine gestörten Signalteile.

Eine weitere Verbesserungsmöglichkeit ergibt sich, wenn in die Schaltungsanordnung von Fig.5 zwischen die Umschalt-Verzögerungsstufe vu und den Steuereingang des ersten elektronischen Umschalters S1 eine logische Torschaltung lg eingefügt wird. Diese soll den ersten elektronischen Umschalter S1 nur dann in die zweite Schalterposition 2 steuern, wenn das Umschaltsignal u vor der Umschalt-Verzögerungsstufe vu den Zustand "0" und gleichzeitig das Umschaltsignal u′ nach der Umschalt-Verzögerungsstufe vu den Zustand "1" einnimmt.

Damit wird sichergestellt, daß bei zwei aufeinanderfolgenden Störsignalen im Abstand nT das zweite Störsignal nicht das Einfügungssignal sj beeinflußt, und zwar über den Abgriff mit dem 1.Gewichtungsfaktor k1.

Im Ausführungsbeispiel nach Fig.7 ist die Einfügungsschaltung eg nach Fig.5 durch einen Hilfsinterpolator ih ergänzt worden. Mit Hilfe dieses Hilfsinterpolators ih wird erreicht, daß das Einfügungssignal sk am Anfang und Ende des Einfügungsintervalles ai keinerlei Signalsprung gegenüber dem ungestörten Stereo-Multiplex-Signal aufweist. Zu diesem Zweck speichert eine erste bzw. eine zweite Abtasthalteschaltung zu Beginn und Ende des Abtastintervalles ai die Signaldifferenz zwischen dem zweiten und ersten Schaltereingang 2,1 des ersten elektronischen Umschalters S1. Dies erfolgt beispielsweise mittels der ersten Subtrahierschaltung sb1, deren Minuend- bzw. Subtrahend-Eingang am zweiten bzw. ersten Schaltereingang 2, 1 angeschlossen ist und deren Ausgang mit einem ersten und zweiten Zwischenspeicher r1, r2 gekoppelt ist. Mittels des Umschalt-Startsignals u1, bzw. des Umschalt-Endsignals u2 wird zu Beginn und Ende des Umschaltsignals u die jeweilige Signaldifferenz in den ersten bzw. zweiten Zwischenspeicher r1, r2 übernommen. Die gespeicherten Werte entsprechen damit der ersten und zweiten Sprunghöhe h1, h2 von Fig.2. Aus dem mittels einer zweiten Subtrahierschaltung sb2 gebildeten Differenzwert der beiden Sprunghöhen h2, h1 wird ein linearer Interpolationswert il gebildet, vgl. auch Fig.2 untere Abbildung.

Die Sprunghöhendifferenz h2-h1 wird mittels einer Dividierschaltung 1/N und eines Akkumulators ak in ein treppenförmiges Signal aus N-Stufen unterteilt, das zum Einfügungssignal sj während des Einfügungsintervalls ai addiert wird. Die Bildung des Akkumulationswertes erfolgt im Akkumulator ak, dessen Addierer, der dritte Addierer a3, mit dem Ausgangssignal der Dividierschaltung 1/N gespeist ist.

Der Setzeingang S des in der Akkuschleife liegenden Akkuregisters z wird zu Beginn des Umschaltsignals u mit der ersten Sprunghöhe h1 geladen. Dies erfolgt mittels des Umschalt-Startsignals u1 und des ersten elektronischen Schalters S3, der den Setzeingang S an den Ausgang des ersten Zwischenspeichers r1 während des Umschalt-Startsignals u1 anschließt.

Die Dividierschaltung 1/N bestimmt durch die Anzahl N der im Einfügungsintervall ai enthaltenen Abtastwerte die einzelnen Stufenhöhen des Interpolationswertes il. Die Anzahl N hängt damit von der Dauer des Einfügungsintervalls ai und der Abtastrate ab, die durch den Systemtakt cl vorgegeben ist. Bei einem festen Einfügungsintervall ai liegt auch die Anzahl N der Abtasttakte fest.

Wenn die Dauer des Einfügungsintervalls ai zeitlich variabel ist, dann ändert sich die Anzahl N der im Einfügungsintervall enthaltenen Abtasttakte. Die Ermittelung der genauen Anzahl N kann jedoch erst erfolgen, wenn die Dauer des Fehlersignals fs oder des Umschaltsignals u bekannt sind. Dies erfordert beispielsweise eine in Fig.7 nicht dargestellte zusätzliche Signalverzögerungsstufe und Zeitdauer-Bestimmungseinrichtung, um die genaue Dauer des gestörten Signalabschnittes ax zu bestimmen, bevor die in Fig.7 dargestellte Signalverarbeitung erfolgt. Andererseits sind die Zündstörungen in ihren zeitlichen Ablauf recht definiert, so daß bereits ein vorgegebener fester Zahlenwert für die Anzahl N der Abtastimpulse für eine zufriedenstellende Interpolation voll ausreicht.

Ein zweiter elektronischer Umschalter S4 trennt nach dem Einfügungsintervall ai den Interpolationswert il vom korrigierten Stereo-Multiplex-Signal sk ab. Der zweite elektronische Schalter S4 ist daher nur während des Umschaltsignals u geschlossen und verbindet dabei den Ausgang des Akkumulators ak mit dem Eingang eines vierten Addierers a4, dessen anderer Eingang mit dem unkorrigierten, also Einfügungssprünge aufweisenden Einfügungssignal sj gespeist ist und dessen Ausgang das korrigierte Stereo-Multiplex-Signal sk liefert. Dabei wird das unkorrigierte Einfügungssignal sj - außerhalb des Einfügungsintervalls ai ist es das ungestörte Stereo-Multiplex-Signal sm - mittels einer Laufzeitausgleichsstufe lv verzögert, um den Interpolationswert il und das Einfügungssignal sj zeitlich zu synchronisieren. Den Laufzeitausgleich kann beispielsweise ein vom Systemtakt cl gesteuertes Schieberegister bewirken.

Im Ausführungsbeispiel nach Fig.7 wird das Umschaltsignal u aus dem Fehlersignal fs gewonnen, indem das Fehlersignal zuerst über eine Umschalt-Verzögerungsstufe vu geführt ist und danach eine vom Systemtakt cl gesteuerte Zeitgeberschaltung ts triggert. Als Zeitgebereinheit kann dieser einen Zähler enthalten, dessen Zählwert N einstellbar oder fest vorgegeben ist.

In Fig.8 ist in der oberen Figurenhälfte das Frequenzschema des Stereo-Multiplex-Signals sm in der Basisbandlage dargestellt. Zwischen 30 Hz und 15 kHz liegt der Hauptkanal L+R und zwischen 23 kHz und 53 kHz liegt um den Hilfsträgerrest tr bei 38 kHz der Hilfsträgerkanal L-R. Bei 19 kHz liegt der Pilotton und bei 57 kHz liegt der Verkehrsträger vt, der schmalbandig mit Verkehrsinformationen und Kennungssignalen moduliert ist.

Im unteren Teil zeigt die Fig.8 das Stereo-Multiplex-Signal sm′ in inverser Basisbandlage, bei der im Frequenzbereich von 30 Hz bis 15 kHz der Hilfsträgerkanal L-R und im Frequenzbereich von 23 kHz bis 53 kHz der Hauptkanal L+R liegt. Durch Umsetzung des Stereo-Multiplex-Signals in Basisbandlage mit einem Träger tr von 38 kHz erhält man die inverse Basisbandlage sm′ - dies erfolgt beispielsweise bei der Dekodierung des Stereo-Multiplex-Signals. In der inversen Basisbandlage enthält das Stereo-Multiplex-Signal sm′ bei 19 kHz sowohl den Pilotton pt′ als auch den Verkehrsträger vt′. Es ist daher von Vorteil, wenn auch in diesem Fall der Frequenzbereich pt, vt′ bei 19 kHz schmalbandig - um keine Störsignalverbreiterung zu bewirken - durch das Sperrfilter sf (vgl. Fig.3) vor der Einfügungsschaltung eg unterdrückt wird.

In Fig.9 ist schematisch eine Stereo-Multiplex-Signalverarbeitungsschaltung mit aktiver Störungsunterdrückung (= ASU) dargestellt, die einen ersten Signalpfad für das Stereo-Multiplex-Signal sm in Basisbandlage und einen dazu parallelen zweiten Signalpfad für das Stereo-Multiplex-Signal sm′ in inverser Basisbandlage aufweist. Letzteres wird aus dem Basisbandsignal durch Umsetzung in einem Mischer m gebildet, dessen Mischungseingang mit einem Hilfsträger tr von 38 kHz gespeist ist. Da die weitere Signalverarbeitung eine digitale ist enthält der erste bzw. der zweite Signalpfad einen Analog-Digital-Umsetzer ad1, ad2, dessen Ausgang jeweils ein einstelliges pulsdichtemoduliertes Signal mit 8 MHz Taktfrequenz ist. Mittels einer ersten bzw. zweiten Dezimierschaltung dz1, dz2 wird die Taktfrequenz auf 228 kHz reduziert, wobei das Datenwort jedoch eine Breite von 14 Binärstellen umfaßt. Mit diesem Datensignal ist eine erste bzw. eine zweite ASU su1, su2 im ersten bzw. zweiten Datenpfad gespeist. Die beiden ASU su1, su2 sind einander selbstverständlich völlig gleich - dies wäre bei einer analogen Realisierung kaum möglich.

Fig.9 zeigt ferner eine gestrichelt dargestellte Datenverbindung zwischen der ersten bzw. zweiten Dezimierschaltung dz1, dz2 und der ersten bzw. zweiten ASU su1, su2. Diese Datenverbindung ist mit einem Vielfachen von 228 kHz, z.B. 912 kHz, getaktet. Sie dient allein der Fehlererkennungsschaltung fd, die im Signalbereich oberhalb 100 kHz die Zündstörungen erkennen muß.

Am Ausgang der ersten ASU su1 wird mittels eines ersten Tiefpasses tp1 der Hauptkanal L+R aus dem Signalgemisch abgetrennt und am Ausgang der zweiten ASU su2 wird mittels eines zweiten Tiefpasses tp2 der Hilfsträgerkanal L-R abgetrennt. Durch Zusammenfügung beider Signale in der Stereomatrix sx wird daraus der rechte bzw. linke Tonkanal R, L gebildet. Zweckmäßigerweise erfolgt im ersten und zweiten Tiefpaß tp1, tp2 gleichzeitig mit der Tiefpaßfilterung nochmals eine Taktreduktion, so daß die Stereomatrix sx nur Daten mit der niederen Taktrate von 38 kHz zu verarbeiten hat.

## Patentansprüche

1. Verfahren zur aktiven Störungsunterdrückung bei StereoMultiplex-Signalen (sm), insbesondere in einem Auto-Rundfunkempfänger, bei denen in einem Einfügungsintervall (ai) das zeitlich einen gestörten Signalabschnitt (ax) überdeckt, das gestörte Stereo-Multiplex-Signal (sm) durch ein Einfügungssignal (s1, s2, si; sy; sk) ersetzt wird, das mittels Signalverzögerungseinrichtungen mit festen Verzögerungszeiten aus ungestörten Signalbereichen gebildet wird,
gekennzeichnet durch folgende Merkmale:
- das Stereo-Multiplex-Signal (sm) ist digitalisiert und befindet sich in der normalen und/oder in der inversen Basisbandlage,
- jeder der Einfügungswerte (Pi) des Einfügungssignals (s1, s2, si; sy; sk) ist aus Abtastwerten (P1, P2) des StereoMultiplex-Signals (sm) gebildet, deren zeitlicher Abstand vom jeweiligen Einfügungszeitpunkt (ti) durch ein einfaches ganzzahliges Vielfaches n der Periodendauer T eines im Stereo-Multiplex-Signal (sm) enthaltenen Trägers (pt, tr, vt) definiert wird, wobei das Einfügungsintervall (ai) höchstens so groß wie der kleinste der Zeitabschnitte nT, auch als Grundintervall nT bezeichnet, mit n = 1, 2, 3... ist, und
- die der Einfügung dienenden Abtastwerte (P1, P2) liegen im Stereo-Multiplex-Signal (sm) zeitlich vor und/oder zeitlich hinter dem gestörten Signalabschnitt (ax).

2. Verfahren nach Anspruch 1, dadurch gekennzeichnet, daß das Einfügungssignal (sk) am Anfang und Ende des Einfügungsintervalls (ai) mittels einer linearen Übergangs-Interpolation ohne Sprung in das Stereo-Multiplex-Signal (sm) eingefügt wird, wobei dem zu korrigierenden Einfügungssignal (sy) additiv ein Interpolationswert (il) hinzugefügt wird, der aus einer linearen Interpolation einer ersten und zweiten Sprunghöhe (h1, h2) des zu korrigierenden Einfügungssignals (sy) am Anfang bzw. am Ende des Einfügungsintervalls (ai) gebildet wird.

3. Verfahren nach Anspruch 1 oder 2, dadurch gekennzeichnet, daß bei einer Störung der zur Bildung des Einfügungssignals (s1, s2; si; sy; sk) dienenden Abtastwerte (P1, P2) diese durch einen um das Grundintervall nT früheren oder späteren Signalwert des Stereo-Multiplex-Signals (sm) ersetzt werden.

## Claims

1. A method for active noise suppression in stereo multiplex signals (sm), particularly in an automotive radio receiver, wherein in an insertion interval (ai) which covers a disturbed signal section (ax) in time, the disturbed stereo multiplex signal (sm) is replaced by an insertion signal (s1, s2, si; sy; sk) which is formed from undisturbed signal sections by means of signal delay devices with fixed delays,
characterized by the following features:
- The stereo multiplex signal (sm) is digitized and is at normal baseband and/or at inverse baseband;
- each of the insertion values (Pi) of the insertion signal (s1, s2, si; sy; sk) is formed from sample values (P1, P2) of the stereo multiplex signal (sm) whose time spacing from the respective instant of insertion (ti) is defined by an integral multiple n of the period T of a carrier (pt), tr, vt) contained in the stereo multiplex signal (sm), the insertion interval (ai) being not longer than the shortest of the time sections nT, also referred to as basic interval nT, where n = 1, 2, 3, ..., and
- the sample values (P1, P2) used for the insertion precede and/or follow the disturbed signal section (ax) in the stereo multiplex signal (sm) in time.

2. A method as claimed in claim 1, characterized in that the insertion signal (sk) is inserted into the stereo multiplex signal (sm) at the beginning and end of the insertion interval (ai) without a step by linear transition interpolation, with an interpolation value (il) being added to the uncorrected insertion signal (sy), said interpolation value (il) being formed by linear interpolation of a first and a second step height (h1, h2) of the uncorrected insertion signal (sy) at the beginning and end, respectively, of the insertion interval (ai).

3. A method as claimed in claim 1 or 2, characterized in that in case of an error in the sample values (P1, P2) serving to form the insertion signal (s1, s2; si; sy; sk), these sample values are replaced by a value of the stereo multiplex signal (sm) which occurs earlier or later by the basic interval nT.

## Revendications

1. Procédé de suppression active du parasitage dans des signaux stéréophoniques multiplex (sm), notamment dans un récepteur radio d'automobile, dans lequels, pendant un intervalle d'insertion (ai), la partie de signal (ax) perturbée dans le temps est masquée, le signal stéréophonique multiplex perturbé (sm) est remplacé par un signal d'insertion (s1, s2, si; sy; sk), qui est formé au moyen de dispositifs de retardement dans des signaux produisant des retards fixes, à partir de parties non perturbées des signaux,
caractérisé par les caractéristiques suivantes :
- le signal stéréophonique multiplex (sm) est numérisé et est situé dans la position normale dans la bande de base et/ou dans la position inverse dans la bande de base,
- chacune des valeurs d'insertion (Pi) du signal d' insertion (s1, s2, si; sy; sk) est formée à partir de valeurs d'échantillonnage (P1, P2) du signal stéréophonique multiplex (sm), dont l'écart temporel par rapport à l'instant respectif d'insertion (ti) est défini par un multiple entier simple n de la durée T de la période d'une porteuse (pt, tr, vt) contenue dans le signal stéréophonique multiplex (sm), l'intervalle d'insertion (ai) étant égal au maximum au plus petit des intervalles de temps nT, également désigné sous l'expression intervalle de base nT, avec n = 1, 2, 3, ..., et
- les valeurs d'échantillonnage (P1,P2), utilisées pour l'insertion, sont situées dans le signal stéréophonique multiplex (sm) en avant et/ou en arrière, dans le temps, de la partie perturbée (ax) du signal.

2. Procédé selon la revendication 1, caractérisé en ce que le signal d'insertion (sk) est inséré sans saut dans le signal stérophonique multiplex (sm) au début et à la fin de l'intervalle d'insertion (ai), au moyen d'une interpolation de jonction linéaire, et selon lequel au signal d'insertion (sy) devant être corrigé est ajoutée de façon additive une valeur d'interpolation (il), qui est formée à partir d'une interpolation linéaire de première et seconde amplitudes de saut (h1, h2) du signal d'insertion (sy) devant être corrigé, au début ou à la fin d'un intervalle d'insertion (ai).

3. Procédé selon la revendication 1 ou 2, caractérisé en ce que, dans le cas d'une perturbation des valeurs d'échantillonnage (P1, P2) utilisées pour la formation du signal d'insertion (s1, s2; si; sy; sk), ces dernières sont remplacées par une valeur, antérieure ou postérieure de l'intervalle de base nT, du signal stéréophonique multiplex (sm).
